# EUROPEAN PATENT SPECIFICATION

(11) **EP 0 681 997 B1**
(45) Date of publication and mention of the grant of the patent: **04.06.1997**
(21) Application number: 95200280.6
(22) Date of filing: 06.02.1995
(51) Int. Cl.: C04B 18/10

(54) **Method for processing slags of a waste incineration plant and concrete element**
Verfahren zum Gewinnnen von in Müllverbrennungsanlagen anfallenden Schlacken und daraus hergestellte Betongegenstände
Procédé pour le traitement des scories d'installations de brûlage de déchêts et éléments en béton incorporant ces scories traitées

(30) Priority: 11.02.1994 BE 9400166
(43) Date of publication of application: 15.11.1995
(73) Proprietor: Gewestelijk Agentschap voor Netheid, B-1150 Brussel (BE)
(72) Inventor: De Bruyn, Rodolph, B-3010 Kessel-Lo (BE); Pien, André, B-1640 St.-Genesius-Rode (BE); Jurisse, Michel, B-1170 Brussel (BE)
(74) Representative: Konings, Lucien Marie Cornelis Joseph

(56) References cited:
- WO-A-91/08990
- DE-A- 1 771 879
- DE-A- 3 641 786
- GB-A- 829 988
- GB-A- 1 013 749
- STICHTING CENTRUM VOOR REGELGEVING EN ONDERZOEK IN DE GROND-, WATER- EN WEGENBOUW EN DE VERKEERSTECHNIEK 'RESTEN ZIJN GEEN AFVAL ( MEER ) , AFVALVERBRANDINGSSLAKKEN' October 1988 , STICHTING C.R.O.W. , BREDA ( NL ) * page 16 - page 19 * * page 22 - page 24 * * page 32 - page 33 *
- CHEMICAL ABSTRACTS, vol. 108, no. 24, 13 June 1988, Columbus, Ohio, US; abstract no. 209192g, HATANAKA , FUTOSHI 'MORTAR CONTAINING MUNICIPAL REFUSE INCINERATION ASH FUSED SLAG'
- CHEMICAL ABSTRACTS, vol. 108, no. 24, 13 June 1988, Columbus, Ohio, US; abstract no. 209188k, HATANAKA , FUTOSHI 'CONCRETE PLATES FROM MUNICIPAL REFUSE INCINERATION ASH FUSED SLAG'
- CHEMICAL ABSTRACTS, vol. 106, no. 14, 6 April 1987, Columbus, Ohio, US; abstract no. 107096v, FURUKAWA , TOSHIHARU 'AGGREGATE FROM WASTE MATERIALS'
- CHEMICAL ABSTRACTS, vol. 99, no. 22, 28 November 1983, Columbus, Ohio, US; abstract no. 180662t, 'SHAPING OF ASH FROM GARBAGE INCINERATION' page 298 ;column 2 ;
- DATABASE WPI Week 8304, Derwent Publications Ltd., London, GB; AN 83-07984K & JP-A-57 200 259 (DAIDO TOKUSHUKO KK) 8 December 1982

## Description

The invention relates to a method for processing slags of a waste incineration plant as indicated in the preamble of claim 1.

Said method is disclosed in DE-A-3641786 JP-A-49-118355 and JP-A-61-189151. Said publications propose to produce full concrete elements such as street stones and/or wall stones from a mixture comprising slags of a waste incineration plant, in order to contribute to the ecological problem of the gigantic slag mass. The stones produced are of bad quality. They have cracks when the mixture comprises slags. This will probably be the reason for the fact that said known method has not been carried out up to now for substantially contributing to a solution for said gigantic slag mass.

In order to really contribute toward a solution for the ecological problem of the slag mass, the invention provides the method according to claim 1.

Although the production of thin-walled hollow concrete elements in general requires a better concrete mortar condition than the production of full concrete stones, it has been found that thin-walled hollow elements manufactured according to the invention do not present cracks.

Any component which may form during the curing step of the manufacturing process can migrate out of the thin walls of the concrete element without this resulting in cracking or other destruction of the concrete element.

The final removal by way of dumping slags can hereby essentially be avoided or reduced and these slags are employed usefully.

The invention relates to and also provides a thin-walled hollow concrete element manufactured according to the method of the invention. Such concrete elements are found to be extremely useful in the building industry, for example as concrete blocks for brickwork of walls, partitions or foundations, or as ceiling filling elements.

The invention will be elucidated in the description following hereinbelow with reference to a drawing, in which:
figure 1 is a diagram showing the quality categories 4/1.2 and 6/1.6 for concrete blocks;
figures 2-5 show perspective views of concrete elements according to the invention; and
figure 6 shows a perspective view of another type of hollow concrete element.

In a normal waste incineration plant, waste, for example domestic waste and/or other waste is incinerated, whereby the bottom ash of the furnace is cooled, for example in a water reservoir, and whereafter the thus created non-glazed bottom slags are divested of large elements, for example unincinerated objects, and de-ironed, for example by means of a rotating magnetic drum. Non-ferrous metals are optionally also removed from the non-glazed bottom slags. Said slags are the product of a normal waste incineration plant, wherein any grid and the ash lying thereon are not brought to such a high temperature that slags can glaze.

A thermal after-treatment to glaze bottom slags is not applied with a view to an environmentally-friendly dumping.

These non-glazed bottom slags are likewise subjected to a maturing process for some time, for example 2 or 3 months, at a storage location, wherein organic and inorganic substances react so that these slags become more stable.

These slags are thereafter screened using a screen with a mesh width of 10 mm. It is conceivable to use larger or less large screen fractions. It is also possible to screen or wash out the finer screen fraction, for example from 0-2 mm, in which case the amount of cement required is reduced. The washing water can then optionally be re-used as extinguishing water to extinguish the furnace slag. The thus pre-treated non-glazed bottom slags are supplied batch-wise to a concrete mixer for preparation of a concrete mass. For each concrete mixer filling are fed to the concrete mixer: the components of cement, slags and water and optionally sand and/or gravel, for example in the weight ratio as indicated in the mix examples from the table below.

It should be noted here that the examples are based on moist non-glazed bottom slags with a pre-measured moisture content of 26 to 27% and sand with a pre-measured moisture content of 6%. At other moisture contents the amount of water to be added is adapted.

As cement can be used blast-furnace slag cement (such as CEM III/A, formerly known as HK (for example HK40)), but Portland cement (CEM I, formerly known as P (for example P50)) is preferably used. Other types of cement are also conceivable in different proportions as required.

Additives can optionally be added to the concrete mix to alter the characteristics, such as water reducing means, air bubble formers, gas or foam generating means, plasticizing mineral powders, water-restraining means, bonding retarders, bonding accelerators, curing accelerators, antifreeze, permeability reducing means, liquid repellant means, adhesive means, corrosion inhibitors, alterers of the alkali granulate reaction, biocides and/or colouring means.

After several minutes of mixing in a concrete mixer the prepared concrete is poured into moulds and these moulds are vibrated for a time, for example a few seconds. The resulting green elements are then removed from the moulds and cured, for example in forced manner by heating under atmospheric pressure or in an autoclave with steam under pressure. The curing preferably takes place by curing the green elements in a first curing step for a time, for example several hours or a day, in a substantially closed curing area which becomes hot and moist due to the heat and the moisture released during the curing reaction. This first curing step can take place by slowly moving the green elements on wagons through an elongated hall from one end to the other end. At the end of the first curing step the then form-retaining green elements are packed in stacks and stored on a stacking field to undergo a second curing step for a number of days under atmospheric conditions. When they have attained the required hardness, for example after 7 or 28 days, they are delivered and used as building elements, for example in brickwork, foundations or ceilings.

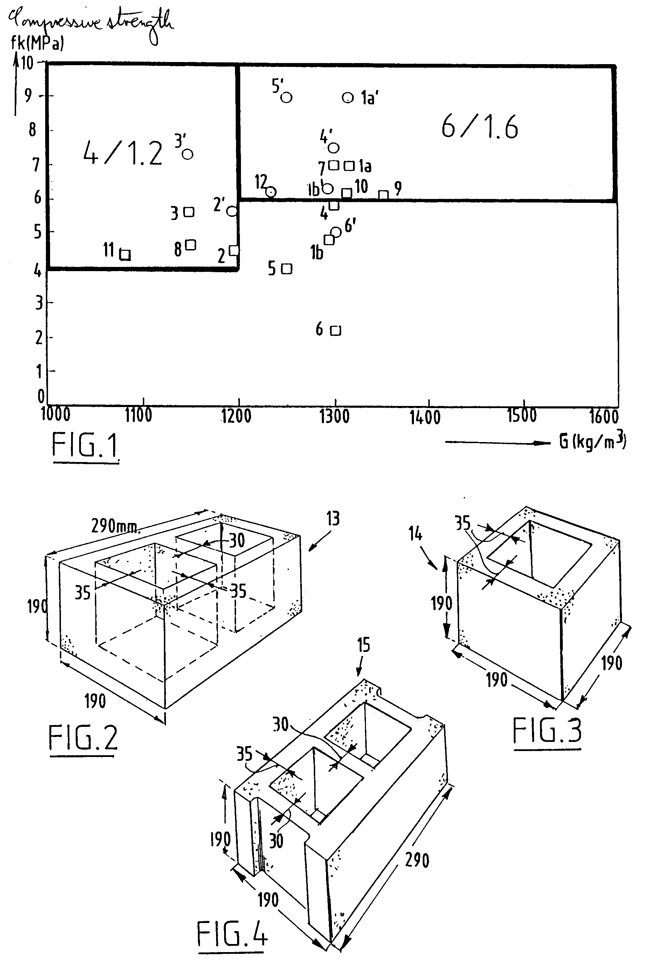

Particularly suitable as hollow concrete elements are the thin-walled concrete blocks 13-16, flower tubs 17 with the shapes and dimensions according to figures 2-6 and similar hollow concrete elements. The concrete elements 13-17 are manufactured with a wall thickness of several centimetres, for example 2.5 - 6 cm, preferably about 3 to 4 cm, without metal reinforcement.

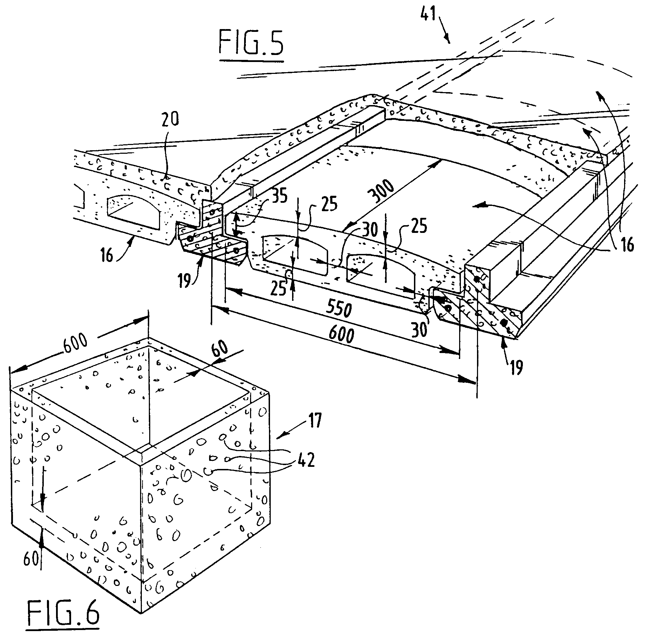

In a ceiling 41 of figure 5 filling blocks 16 according to the invention are supported by reinforced concrete beams 19, while this structure is covered by a concrete layer 20.

Figure 6 shows as a hollow thin-walled concrete element according to the invention a flower tub 17 which can optionally be set with pebbles 42 on its outer sides.

If particular quality standards for hollow concrete elements such as the flower tub 17 are not set by quality specifications or if there are lower relevant quality requirements, it is even conceivable to manufacture such concrete elements from a concrete mix as according to trial mix 6.

Any components occurring in the concrete during the curing step of the manufacturing process can easily migrate because of the thin-walled and porous state of this concrete, so that they cannot result in disturbing concrete cracks. Owing to the absence of steel reinforcing material such components do not result in corrosion of such a reinforcement.

Also included in the table below for each mix with non-glazed bottom slags are values for several properties, while in the diagram of figure 1 the position of the concrete quality of the mix examples 1-12 is indicated. Understood by the apparent specific gravity G is the weight of the dry hollow block divided by the volume enclosed by the external block dimensions. To manufacture a light concrete block within the quality category 4/1.2 as many slags as possible are preferably processed. This means that no or little sand is used. In order to manufacture the concrete block just within the quality category 6/1.6 the minimum amount of sand is preferably used, that is, the maximum amount of slags, for example in the order of magnitude of three parts by weight of moist non-glazed bottom slags to two parts by weight of moist sand. According to the invention it is proposed to manufacture hollow thin-walled concrete blocks for example according to the stated compositions for trial mixes, with the exception of trial mix 6.

It is conceivable, though illogical, to include gravel or other filling substances and/or reinforcement in the mix. Optional reinforcing fibres or reinforcement pieces consist for example of natural or artificial fibres or well clad steel.

It is also possible to press the hollow concrete elements instead of compressing them by vibration.

A mix is preferably chosen which results in concrete blocks falling within the quality category in a short time, for example 7 days, in order to reduce the required storage space.

When trial mixes 4 and 7 are compared it can be seen that due to the use of more cement a trial mix not falling within the intended quality category can nevertheless be brought into this quality category.

The compressive strength of trial mix 3 is so good that less cement will suffice, which is shown with trial mix 8.

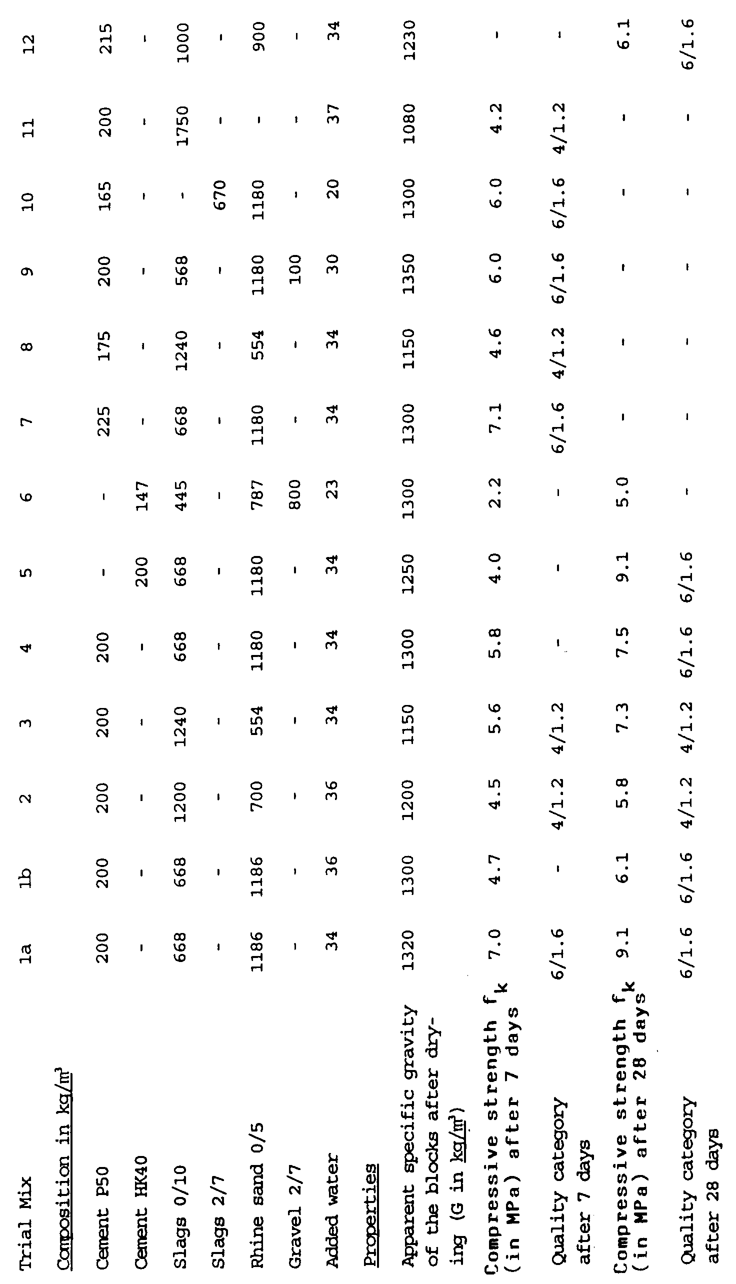

## Claims

1. Method for processing slags of a waste incineration plant, wherein slags are mixed in a concrete mixer together with cement and water to a concrete mass and wherein concrete elements are manufactured from this concrete mass, **characterized in that** thin walled hollow concrete elements are manufactured from said concrete mass.

2. Method as claimed in claim 1, **characterized in that** the slags are subjected to a pre-treatment.

3. Method as claimed in claim 2, **characterized in that** the pre-treatment comprises of:
maturing the slags;
removing large elements;
de-ironing;
and/or breaking and/or screening to prepare a slag mass with a usable granule size.

4. Method as claimed in claim 3, **characterized in that** a slag mass is prepared with a granule size lying between 0 - 15 mm, preferably between 0 - 12 mm and more preferably between 0 - 10 mm.

5. Method as claimed in any of the foregoing claims, **characterized in that** a slag mass is prepared, wherein fine granules are screened and/or washed out.

6. Method as claimed in any of the foregoing claims, **characterized in that** roughly one part by weight of water to five parts by weight of moist slags are added, preferably gradually, to the concrete mixer.

7. Method as claimed in any of the foregoing claims, **characterized in that** in the order of magnitude of one part by weight cement to 8-10 parts by weight of moist slags and moist sand are supplied to the concrete mixer.

8. Method as claimed in any of the foregoing claims, **characterized in that** relatively light concrete blocks are manufactured within a quality category of high compressive strength, for example 6/1.6, wherein about three parts of weight of moist slags to two parts of moist sand are used.

9. Method as claimed in any of the foregoing claims, **characterized in that** light concrete blocks are manufactured within a norm of compressive strength for light concrete blocks, for example quality category 4/1.2, wherein little or no sand is used.

10. Thin-walled hollow concrete element, manufactured by application of the method as claimed in any of the foregoing claims.

## Patentansprüche

1. Verfahren zur Verarbeitung von Schlacken aus einer Müllverbrennungsanlage, wobei die Schlacken in einem Betonmischer zusammen mit Zement und Wasser zu einer Betonmasse gemischt werden und wobei aus dieser Betonmasse Betonelemente hergestellt werden, **dadurch gekennzeichnet, daß** aus der Betonmasse dünnwandige, hohle Betonelemente hergestellt werden.

2. Verfahren nach Anspruch 1, dadurch gekennzeichnet, daß die Schlacken einer Vorbehandlung unterzogen werden.

3. Verfahren nach Anspruch 2, dadurch gekennzeichnet, daß die Vorbehandlung umfaßt:
- Reifung der Schlacken;
- Entfernen großer Gegenstände;
- Enteisenung;
- und/oder Brechen und/oder Sieben zur Herstellung einer Schlacken-Masse mit einer brauchbaren Korngröße.

4. Verfahren nach Anspruch 3, dadurch gekennzeichnet, daß eine Schlackenmasse mit einer Korngröße vorbereitet wird, die zwischen 0 und 15 mm, bevorzugt zwischen 0 und 12 mm und noch bevorzugter zwischen 0 und 10 mm liegt.

5. Verfahren nach einem der vorstehenden Ansprüche, dadurch gekennzeichnet, daß eine Schlackenmasse vorbereitet wird, wobei feine Körnchen ausgesiebt und/oder ausgewaschen werden.

6. Verfahren nach einem der vorstehenden Ansprüche, dadurch gekennzeichnet, daß ein Gewichtsanteil Wasser auf fünf Gewichtsanteile feuchter Schlacke, bevorzugt schrittweise, dem Betonmischer zugegeben werden.

7. Verfahren nach einem der vorstehenden Ansprüche, dadurch gekennzeichnet, daß größenordnungsmäßig 1 Gewichtsanteil Zement pro 8 bis 10 Gewichtsanteile von feuchten Schlacken und feuchtem Sand dem Betonmischer zugeführt werden.

8. Verfahren nach einem der vorstehenden Ansprüche, dadurch gekennzeichnet, daß verhältnismäßig leichte Betonblöcke innerhalb einer Qualitätskategorie hoher Druckfestigkeit, zum Beispiel 6/1,6, hergestellt werden, wobei etwa drei Gewichtsanteile feuchter Schlacken auf zwei Gewichtsanteile feuchten Sands verwendet werden.

9. Verfahren nach einem der vorstehenden Ansprüche, dadurch gekennzeichnet, daß leichte Betonblöcke innerhalb einer Norm hoher Druckfestigkeit für leichte Betonblöcke, zum Beispiel der Qualitätskategorie 4/1,2, hergestellt werden, wobei wenig oder kein Sand verwendet wird.

10. Dünnwandiges, hohles Betonelement, dadurch gekennzeichnet, daß es nach einem Verfahren nach einem der vorstehenden Ansprüche hergestellt ist.

## Revendications

1. Procédé de traitement des scories d'une installation d'incinération de déchets, dans lequel les scories sont mélangées dans un mélangeur à béton, conjointement avec du ciment et de l'eau, en une masse de béton, et dans lequel on fabrique des éléments de béton à partir de cette masse de béton, caractérisé en ce qu'on fabrique des éléments de béton creux à paroi mince à partir de cette masse de béton.

2. Procédé selon la revendication 1, caractérisé en ce que les scories sont soumises à un prétraitement.

3. Procédé selon la revendication 2, caractérisé en ce que le prétraitement comprend :
la maturation des scories ;
l'élimination des gros éléments ;
une élimination du fer ;
et/ou un concassage et/ou un tamisage pour préparer une masse de scories ayant une taille de granulés utilisable.

4. Procédé selon la revendication 3, caractérisé en ce qu'on prépare une masse de scorie ayant une taille granulaire de 0 à 15 mm, de préférence de 0 à 12 mm, en particulier de 0 à 10 mm.

5. Procédé selon l'une quelconque des revendications précédentes, caractérisé en ce qu'on prépare une masse de scorie dans laquelle les fins granulés ont été éliminés par tamisage et/ou lavage.

6. Procédé selon l'une quelconque des revendications précédentes, caractérisé en ce qu'environ 1 partie en poids d'eau pour 5 parties en poids de scories humides, sont ajoutées, de préférence progressivement dans le mélangeur à béton.

7. Procédé selon l'une quelconque des revendications précédentes, caractérisé en ce qu'on introduit dans le mélangeur à béton, environ 1 partie en poids de ciment pour 8 à 10 parties en poids de scories humides et de sable humide.

8. Procédé selon l'une quelconque des revendications précédents, caractérisé en ce qu'on fabrique des blocs de béton relativement légers d'une catégorie de qualité à haute résistance à la compression, par exemple 6/1.6, dans lequel on emploie environ 3 parties en poids de scories humides pour 2 parties de sable humide.

9. Procédé selon l'une quelconque des revendications précédentes, caractérisé en ce que l'on fabrique des blocs de béton léger conformes à une norme de résistance à la compression pour les blocs de béton légers, par exemple la catégorie de qualité 4/1.2, dans lequel on emploie peu ou pas de sable.

10. Elément de béton creux à paroi mince fabriqué en mettant en oeuvre le procédé selon l'une quelconque des revendications précédentes.
